# EUROPÄISCHE PATENTANMELDUNG

(11) **EP 1 074 211 A1**
(43) Veröffentlichungstag der Anmeldung: **07.02.2001**
(21) Anmeldenummer: 00115992.0
(22) Anmeldetag: 26.07.2000
(51) Int. Cl.: A47J 43/07

(54) **Spritzschutz für das Pürieren im Kochtopf**

(30) Priorität: 31.07.1999 DE 19936157
(71) Anmelder: Huber, Helmut, 77974 Meissenheim (DE)
(72) Erfinder: Huber, Helmut, 77974 Meissenheim (DE)

(57) **Zusammenfassung**

Der Spritzschutz besteht aus einem Topfrand zur Innenseite hin, der eine passend grosse Öffnung erhält und möglichst passend zum Topf, sich an der Innenseite möglichst tief anlegt. Nachgebende Dichtungen am Umfang verbessern die Anwendung oder überbrücken kleine Durchmesserunterschiede. Das Anfassen des Topfgriffs mit dem Daumen auf dem Spritzrand, ermöglicht das seitliche Anheben des Topfes bei kleinem Inhalt und drückt den Spritzrand gegen den Topf gegen Ausschleudern. Mit einem sich mitdrehenden Abschlussdeckel ist nur noch eine kleine Öffnung für die Geräte vorhanden und damit die höchstmögliche Sicherheit eines Püriervorgangs mit kochend heissem Inhalt gegeben.

Es entfällt das Umschütten kochend heissem Kochguts in Gefässe mit kleinerer Weite und damit höheren Füllstandes, die kippelig sind und damit eine weit grössere Gefahr darstellen. Auch können diese Gefässe mit anderem Inhalt gefüllt sein. So wird die Baustelle Küche mit den Rührgeräten, man bezeichnet den Handmixer auch als Zauberstab, nichtmehr zur Unfallgefahrenstelle mit grösserer Verletzungsgefahr als die Strasse.

Eine Normung der Topf-Innendurchmessermasse wäre aus diesen und anderen Gründen längst überfällig.

## Beschreibung

Beim Pürieren eines Gerichts mit einem schnellaufenden Pürierstab oder einem Elektrorührer auch mit Doppelbesen, kommt es immer unkontrolliert zu Aufwallungen und Ausschleudern des Pürierguts über den Topfrand hinaus. Ferner ein leichteres Spritzen heisser Flüssigkeit nach oben. Oft wird das Püriergut umgeschüttet. Es werden enge Gefässe um den Füllstand zu erhöhen verwendet, die oft kippelig sind und von Kindern leicht erfasst und umgestossen werden können und die zusätzlich noch durch ihre Farbgebung Kindern auffällig werden.

Die Erfindung ermöglicht nun diesen sehr einfachen Vorgang des Pürierens im Kochtopf, durch Abschirmen des Püriergutes, ohne dessen Ausschleudern und Spritzens auszuführen.

Da beim Kochen grösserer Menüs oft viel Geschirr anfällt, durch Probleme beim Kochen immer wieder schnelles Handeln oder Umdisponieren notwendig wird, ist hier Unfallschutz besonders notwendig.

Man denke mal an den Besuch von Verwandten. Da wird die Küche zur Drehscheibe der Kochinteressierten. Mithilfe des Besuchs ist oft ebenfalls gegeben. Dann kommen noch die Kinder dazu. Es wird geredet und schnell hat ein Kind was neues entdeckt, fasst an, und schon ist ein kippeliges Gefäss mit kochend heissem Inhalt über Gesicht und Körper gegossen und schwerste Verbrennungen entstanden. Was nun schnell wenn das enge Gefäss gerade anderweitig eingesetzt ist?

Meines Wissens sind im Haushalt mehr Unfälle zu verzeichnen als auf den Strassen. Hier nützen die besten Vorschriften, nichts. Wenn selbst von ausgebildeten erfahrenen Piloten die Vorschriften nicht beachtet werden die bei einem Flug mit ausgefahrenem Fahrwerk beachtet werden müssen und mitten im Flug mit 100ten von Menschen an Bord das Benzin ausgeht.

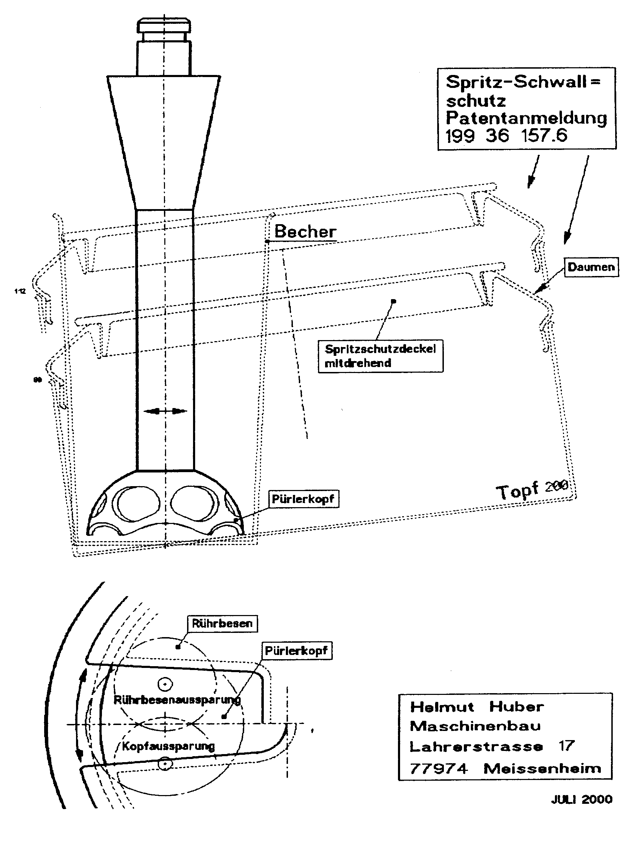

## Patentansprüche

1. Die Erfindung ermöglicht das Pürieren eines Gerichts mit einem Handmixer im Kochtopf. Ferner das Rühren mit einem Elektrorührer, ebenfalls im Kochtopf, ohne das Gericht aus Sicherheitsgründen wegen Spritz- und Überschwallgefahr in einen Maschinen-Standmixer oder gar in engere kippelige Gefässe mit höherem Füllstand und wieder zurück in den Kochtopf geben zu müssen, was ebenfalls in der Baustelle Küche, besonders bei grossen Gerichten, Unvorhergesehenem, Umdisponieren, eiliggewordenen Aktivitäten, Bekanntenbesuch und Kinderaktivitäten bei dann geringerer Aufmerksamkeit der Erziehungs-Verantwortlichen sehr Unfallträchtig ist, mit schwerst möglichen Verbrühungen.
Dadurch gekennzeichent, daß der Kochtopf durch einen Topfdeckel mit Mittelloch, als Überschwall- und durch den eingeschnappten, sich selbst mitdrehenden Deckel mit Einführungsschlitz für die Geräte, abgedeckt wird.

2. Spritzschutz nach Anspruch 1, dadurch gekennzeichnet, das der Kochtopf am Topfgriff mit der Hand auf einer Seite angehoben werden kann und gleichzeitig der Spritzschutz über eine Wärmeisolierung mit dem Daumen festgehalten werden kann.

3. Spritzschutz nach Anspruch 1 und 2, dadurch gekennzeichnet, daß der Spritzschutzrand am zylindrischen Kochtopfrand so tiefliegend ausgeführt ist, daß das Kochgut, besonders beim Schräghalten des Kochtopfes, nicht durch den Spalt nach oben und ausen gelangen kann.

4. Spritzschutz nach Anspruch 1 bis 3, dadurch gekennzeichnet, daß der Spritzschutzrand am zylindrischen Kochtopfrand durch übereinanderliegende Spalte oder Wellenähnlich, das Austreten des Kochguts noch oben zusätzlich verhindert.

5. Spritzschutz nach Anspruch 4, dadurch gekennzeichnet, daß der Spritzschutzrand am zylindrischen Kochtopfrand durch eine anvulkanisierte bzw. sonst dort befestigte Weichdichtung versehen ist.

6. Spritzschutz nach Anspruch 4, dadurch gekennzeichnet, daß der Spritzschutzrand am zylindrischen Kochtopfrand durch anvulkanisierte oder sonst dort befestigte elastische Lippe(n) versehen ist.

7. Spritzschutz nach Anspruch 4 bis 6, dadurch gekennzeichnet, daß eine erhöhte Dichtung des Spritzschutzrandes nach Pos. 4 bis 6 innerhalb eines Kreissegments, auf der dem Haltedaumen gegenüberliegenden Seite ausgeführt ist.

8. Spritzschutz nach Anspruch 1 dadurch gekennzeichnet, daß seine Auflagefläche auf dem Topfrand mit einer elastischen Dichtung versehen ist und der Spritzschutz mit Gummischlaufen an den Topfgriffen befestigt werden kann.

9. Spritzschutz nach Anspruch 1 dadurch gekennzeichnet, daß seine Auflagefläche auf dem Topfrand mit einer elastischen Dichtung versehen ist und der Spritzschutz mit Schnappverschlüssen am Topf befestigt werden kann.

10. Spritzschutz nach Anspruch 1 und 2, dadurch gekennzeichzeichnet, dass in das Mittelloch ein Abschlussdeckel eingeschnappt werden kann, der einerseits durch einseitige Öffnungen, nach der Einführung der Rührgeräte eingeschnappt werden kann und bei den Handbewegungen der Geräte sich automatisch im Kreis mitbewegt. Sowie dessen Öffnung eine Bewegung zur Mitte ermöglichet. Wenn nötig auch an seiner Oberseite, der Mitte zu ansteigend, mit eimem Spritz-Rand versehen ist.
Es ist für den Pürierstab und für den Handrührer mit Doppel-Rührbesen je 1 Abschlussdeckel vorgesehen.
